# EUROPÄISCHE PATENTSCHRIFT

(11) **EP 2 308 219 B1**
(45) Veröffentlichungstag und Bekanntmachung des Hinweises auf die Patenterteilung: **25.04.2012**
(21) Anmeldenummer: 09777262.8
(22) Anmeldetag: 17.07.2009
(51) Int. Cl.: H04M 3/42, H04L 29/06

(54) **ACCESSMANAGEMENT FÜR VERBINDUNGSBEGLEITENDE DATEN VON TELEKOMMUNKATIONSVERBINDUNGEN**
ACCESS MANAGEMENT FOR CONNECTION-ACCOMPANYING DATA OF TELECOMMUNICATION CONNECTIONS
GESTION D'ACCÈS POUR DES DONNÉES ACCOMPAGNANT DES LIAISONS DE TÉLÉCOMMUNICATION

(30) Priorität: 31.07.2008 DE 102008035763
(43) Veröffentlichungstag der Anmeldung: 13.04.2011
(73) Patentinhaber: Deutsche Telekom AG, 53113 Bonn (DE)
(72) Erfinder: KRAMARZ VON KOHOUT, Gerhard, 53113 Bonn (DE)
(74) Vertreter: Riebling, Peter
(86) Internationale Anmeldenummer: PCT/EP2009/005206
(87) Internationale Veröffentlichungsnummer: WO 2010/012388

(56) Entgegenhaltungen:
- DE-A1-102004 026 021
- US-B1- 6 529 602
- US-B1- 7 227 930

## Beschreibung

Die Erfindung betrifft ein Verfahren zum Accessmanagement für verbindungsbegleitende Daten von Telekommunikationsverbindungen, nach dem Oberbegriff des Anspruchs 1.

Ein aus dem Stand der Technik allgemein bekanntes Verfahren zur Reproduzierbarkeit (Aufzeichnung) eines Telefongespräches ist mit der Druckschrift DE 10 2004 026 021 A1 offenbart, worin zur Reproduzierbarkeit eines Telefongesprächs die im Telefongespräch erzeugten Sprachsignale endgerätenah abgegriffen und in einer Empfangseinheit, die beispielsweise mittels Bluetooth mit dem Endgerät verbunden ist, gespeichert werden und das aufgezeichnete Telefongespräch mittels Eingabe eines Freigabecodes, wie zum Beispiel eines PIN-Codes (Personal Identity Number), abhörbar ist.

Der wesentliche Nachteil hierbei ist, dass die Sprachsignale grundsätzlich nur von einem der beiden Gesprächsteilnehmer reproduzierbar und abrufbar sind, hingegen der andere Gesprächsteilnehmer im Allgemeinen keine Kontrolle über die Aufzeichnung und keinen direkten Zugriff auf das Speichermedium bzw. -system _{,} seines Gesprächspartners hat.

Darüber hinaus sind die aufgezeichneten Sprachsignale einer dritten Person ebenfalls nicht direkt zugänglich.

Gespräche in einem deutschen Telekommunikationsnetz zwischen mindestens zwei Fernsprechteilnehmern unterliegen dem deutschen Fernmeldegeheimnis, welches derzeit einen Mitschnitt von Telefongesprächen nicht erlaubt, außer sämtliche am Gespräch beteiligte Personen stimmen vor dem Gespräch diesem Mitschnitt zu.

Es ist bekannt, dass Gespräche auch am Telefon grundsätzlich "flüchtig" sind. Dies bedeutet, dass nach Abschluss eines Gespräches die gesprochenen Wörter der Gesprächsteilnehmer "verflogen" bzw. nicht reproduzierbar und bestenfalls nur noch in der Erinnerung der Beteiligten vorhanden sind.

Es gibt jedoch eine Vielzahl von Gründen für die beteiligten Gesprächsteilnehmer eines Telefongesprächs, die gesprochenen Wörter reproduzierbar auszubilden, weil es ihnen interessant und wichtig erscheint, sich ein Gespräch zu einem späteren Zeitpunkt noch einmal im Originalton anzuhören. Dies ist der Fall, wenn zum Beispiel zwischen zwei Gesprächsteilnehmern wichtige Sachverhalte eines bevorstehenden Vertragsabschlusses besprochen werden, welche zur schriftlichen Ausführung des Vertrages reproduzierbar sein sollten.

Unter gewissen Voraussetzungen kann es ebenfalls für Dritte wichtig bzw. notwendig sein, Zugriff auf den Inhalt eines bereits geführten Telefongespräches zu haben, an dem sie selbst nicht beteiligt waren.

Dies gilt nicht nur für Telefongespräche, sondern auch entsprechend für andere Arten der elektronischen Kommunikation, wie zum Beispiel leitungsvermitteltem oder paketvermitteltem Datenverkehr zwischen zwei Teilnehmern sowie auch "IP-Sessions" (Internet-Protokoll Sitzungen) eines Teilnehmers.

Endgerätebasierte Lösungen weisen derzeit die zuvor beschriebenen Einschränkungen auf.

Aus derzeitiger Sicht ist bisher für das hier beschriebene Problem keine zum Stand der Technik zählende adäquate bzw. netzbasierte Lösung offenbart.

Ähnlich der erwähnten Druckschrift DE 10 2004 026 021 A1 sind zwar Endgeräte bzw. Zusatzgeräte für Endgeräte auf dem Markt verfügbar, die das Aufzeichnen eines über dieses Endgerät geführten Gespräches ermöglichen. Die Nutzung derartiger End- bzw. Zusatzgeräte ist aber aus rechtlicher Sicht zumindest problematisch, da der Gesprächspartner in der Regel über diese technischen Möglichkeiten der Gegenseite keine Kenntnis hat oder das Gespräch zuweilen ohne seine vorherige Zustimmung von der Gegenseite aufgezeichnet wird.

Somit hat der Gesprächspartner desjenigen, der über ein solches End- oder Zusatzgerät verfügt, keine Kontrollmöglichkeiten, ob das geführte Gespräch aufgezeichnet wird oder nicht.

Darüber hinaus ist es Dritten technisch nicht möglich, auf diese Weise gezielt Aufzeichnungen ohne Wissen oder Zustimmung der Beteiligten zu realisieren, auch wenn sie hierzu berechtigt wären.

US 7 227 930 B1 offenbart ein Verfahren zur Aufzeichnung von Sprachdaten einer Mobilfunkverbindung und zwar vor allem in Abhängigkeit von Informationen über den Aufenthaltsort der beteiligten Teilnehmer. Die Aufzeichnung erfolgt nicht zentral, sondern dezentral, nämlich in einem Aufzeichnungsgerät, also im Endgerät einer der beiden Kommunikationspartner. Der Teilnehmer mit dem Aufzeichnungsgerät steuert die Aufzeichnung, holt aber ggf. die Zustimmung der Kommunikationsteilnehmer zur Aufzeichnung ein. Zugriffe auf die Sprachdaten sind beschrieben für den aufzeichnenden Teilnehmer und für Law Enforcement Stellen, aber nicht für den anderen Kommunikationspartner. Zugriffe im Einvernehmen zwischen den Kommunikationsteilnehmem sind nicht beschrieben. Eine Aufzeichnung von verbindungsbegleitenden Daten ist lokal im Aufzeichnungsgerät möglich. Durch die lokale Speicherung kann aber nicht auf alle Informationen, die bei einer netzweisen zentralen Erfassung möglich wären, zugegriffen werden und es ist kein "Accessmanagement der Speicherung und des Zugriffs dieser Daten möglich.

US 6 529 602 B1 offenbart ein Verfahren zur Aufzeichnung von Gesprächen. Im Mittelpunkt steht ein Gerät zur sicheren Speicherung von Audiosignalen. Dieses Gerät, im Text "audio vault" genannt, steuert Gesprächsaufbau und Speicherung der aufzuzeichnenden Gespräche. Bevorzugt wird dieses Gerät an eine Nebenstellenanlage angeschlossen. Die Aufzeichnung erfolgt nach Absprache zu Gesprächsbeginn bzw. während des Gespräches. Der Zugriff auf die aufgezeichneten Gesprächsdaten erfolgt über Telefonverbindung oder Webinterface, eine Absprache zwischen den Beteiligten ist nicht erforderlich. Law Enforcement (Zugriff berechtigter Dritter) ist nicht vorgesehen. Eine Aufzeichnung von verbindungsbegleitenden Daten wird an keiner Stelle erwähnt.

Es ist darüber hinaus bekannt, dass die Überwachung von Telefongesprächen, bei denen die Telekommunikation eines einzelnen Teilnehmers - in der Regel auf richterliche Anordnung - zu überwachen ist ("Legal Interception", technisch nicht über einen netzbasierten Mitschnitt realisiert wird.

Stattdessen werden in der Vermittlungstechnik entsprechende Einrichtungen, beispielsweise Konferenzbrücken, genutzt, mit denen Telekommunikationsverbindungen so genannt "verdoppelt" werden und die Kopie an den Anschluss eines Dritten, in der Regel einer hierfür berechtigten Behörde, ausgeleitet wird.

Erst am Anschluss dieses Dritten wird die Telekommunikationsverbindung aufgezeichnet und ausgewertet.

Die überwachten Teilnehmer selbst haben allerdings keinen Zugriff auf die aufgezeichnete Telekommunikation.

Somit ist eine private Nutzung einer derartigen Überwachungstechnik derzeit generell ausgeschlossen.

Es sind somit derzeit keine netzbasierten Lösungen zum Mitschnitt eines Telefongesprächs bekannt, die unter kontrollierten Bedingungen eine spätere Nutzung der Aufzeichnungen insbesondere von den Teilnehmern des Gespräches und / oder von hierzu berechtigten Dritten ermöglichen.

Aus diesem Grunde hat sich die vorliegende Erfindung die Aufgabe gestellt, ein Verfahren und eine Vorrichtung zur Ausführung des Verfahrens zum Accessmanagement für verbindungsbegleitende Daten einer Telekommunikationsverbindung anzugeben, wobei die aufgezeichneten verbindungsbegleitenden Daten netzintern gegen generellen Zugriff gesichert gespeichert werden und die Daten in einfacher Weise reproduzierbar sein sollen, um ausschließlich den hierzu Berechtigten den Zugriff zu ermöglichen.

Zur Lösung der gestellten Aufgabe ist die Erfindung durch die Merkmale des Anspruchs 1 gekennzeichnet.

Erfindungsgemäß befasst sich das Verfahren mit der Steuerbarkeit und Kontrollierbarkeit der Speicherung der verbindungsbegleitenden Daten (z.B. Rufnummer des anrufenden A-Teilnehmers, Rufnummer des angerufenen B-Teilnehmers, Uhrzeit etc.) von Telefongesprächen und sonstigen Formen der Telekommunikation wie beispielsweise leitungs- oder paketvermittelter Datenverbindungen mit einem oder mehreren Teilnehmern und dem späteren Zugriff auf die gespeicherten Daten.

Zusätzlich zu einer Speicherung und Verwaltung der verbindungsbegleitenden Daten einer Telekommunikationsverbindung kann erfindungsgemäß vorgesehen sein, die Inhalte der entsprechenden Telekommunikationsverbindung aufzuzeichnen und sicher zu verwalten.

Ein wesentlicher Vorteil der Erfindung ist, dass die aufzuzeichnenden Gesprächs- bzw. Telekommunikationsverbindungsdaten als verschlüsselte Datenfiles direkt im Netz des verwendeten Telekommunikationsnetzes speicherbar sind, wobei diese Datenfiles erst nach entsprechender Freigabe durch die Teilnehmer der Telekommunikationsverbindung entschlüsselbar und reproduzierbar sind.

Ein weiterer, wesentlicher Vorteil ist, dass in Abhängigkeit von der Ausgestaltung die Datenfiles der aufgezeichneten Telekommunikationsverbindungen von Dritten reproduzierbar sind, wenn diese eine entsprechende Berechtigung zur Entschlüsselung der Datenfiles aufweisen.

Somit besteht das Ziel, das vorbeschriebene Problem mittels des hier beschriebenen Erfindungsgegenstands umfassend zu lösen.

Kunden bzw. Teilnehmer eines Telekommunikationsanbieters - unabhängig davon, ob es sich um Kommunikation via Mobilfunk, Festnetz oder Internet handelt - haben bei der Realisierung der Erfindungsidee den Vorteil, auf einfachste Weise Zugriff auf den Inhalt und die Verbindungsdaten der bereits geführten Telekommunikationsverbindung zu haben, wenn dies erwünscht bzw. erforderlich ist. Dadurch weiß beispielsweise ein Kommunikationsteilnehmer schon vor Beginn eines Telefongespräches, dass wichtige Informationen aus dem bzw. zum folgenden Telefongespräch nicht verloren gehen und später noch einmal angehört bzw. abgerufen werden können.

Je nach Ausgestaltung der Erfindung erlaubt die hier offenbarte Lösung auch den Zugriff berechtigter Dritter auf Kopien des Inhalts eines Telefongespräches oder der verbindungsbegleitenden Daten.

Darüber hinaus realisiert die Erfindungsidee je nach Ausgestaltung die Steuerbarkeit und Kontrollierbarkeit des Mitschneidens einer Telekommunikationsverbindung und der Verbindungsdaten, welche insbesondere unter Einhaltung der einschlägigen gesetzlichen Vorschriften des Datenschutzes und Fernmeldegeheimnisses erfolgen.

Bei einer Telekommunikationsverbindung zwischen den zwei Teilnehmern A und B werden in einem der beteiligten Vermittlungssysteme die zur

Telekommunikationsverbindung gehörigen Signale, insbesondere die Verbindungsdaten und gegebenenfalls der Inhalt, beispielsweise über eine Konferenzbrücke dupliziert.

Dies ist sowohl im Vermittlungssystem des verbindungsaufbauenden Netzes als auch des verbindungszustellenden Netzes durchführbar.

Das Duplikat, also die Kopie beispielsweise der Verbindungsdaten und gegebenenfalls der Inhaltsdaten eines Telefongespräches, wird bevorzugt in ein hierfür geeignetes System weitergeleitet.

Der Inhalt des Duplikates wird dort aufgezeichnet und nach Digitalisierung, falls erforderlich, und Umkodierung in ein geeignetes Format, wie zum Beispiel für die Inhaltsdaten eines Telefongespräch in das "mp3-Format" , als "Mitschnitt" der Verbindung gespeichert.

Je nach Ausgestaltung der Erfindung erfolgt die Speicherung des bedarfsweise digitalisierten bzw. umkodierten Duplikates kryptographisch gesichert.

Bei Datenverbindungen zwischen zwei Teilnehmern bzw. bei Zugriffen einzelner Teilnehmer auf rechnergestützte Systeme, wie zum Beispiel durch das "Surfen im Internet", gilt entsprechendes. Auch hier kann in einem der beteiligten Vermittlungssysteme oder Server eine Kopie erstellt werden, die im Originalformat oder nach Umkodierung in ein geeignetes Format bevorzugt kryptographisch gesichert und als "Mitschnitt" der Telekommunikationsverbindung gespeichert wird.

Der zentrale Aspekt der vorliegenden Erfindung ist es, einerseits die Gestaltbarkeit der Steuerung, welche verbindungsbegleitenden Daten zu welchen Verbindungen gespeichert werden sollen, und andererseits die Ausbildung einer frei wählbaren Festlegung, wer auf welche Weise Zugriff auf die gespeicherten verbindungsbegleitenden Daten hat, zur Verfügung zu stellen.

### Steuerung

Es sind verschiedene Ausgestaltungen zur Steuerung, welche verbindungsbegleitenden Daten gespeichert werden sollen, möglich, welche parallel oder einzeln realisiert werden können:
- Der Teilnehmer wünscht die Speicherung der zu seinem
   Kommunikationsaufkommen zugehörigen verbindungsbegleitenden Daten einschließlich der vollständigen Zielrufnummern.

Der Teilnehmer muss hierzu seinen Netzbetreiber entsprechend vorab beauftragen.
- Der Teilnehmer wünscht die Speicherung der zu seinem
   Kommunikationsaufkommen zugehörigen verbindungsbegleitenden Daten, wobei die Zielrufnummern anonymisiert oder verkürzt sind.

Der Teilnehmer muss hierzu seinen Netzbetreiber entsprechend vorab beauftragen.
- Der Teilnehmer wünscht die Speicherung der zu seinem
   Kommunikationsaufkommen zugehörigen verbindungsbegleitenden Daten, wobei die Zielrufnummern nicht enthalten sind.

Der Teilnehmer muss hierzu seinen Netzbetreiber entsprechend vorab beauftragen.
- Der Teilnehmer wünscht, dass zu seinem Kommunikationsaufkommen die zugehörigen verbindungsbegleitenden Daten nicht gespeichert werden.

Der Teilnehmer muss hierzu seinen Netzbetreiber entsprechend vorab beauftragen.
- Verbindungsbegleitende Daten, die teilnehmerbezogene Daten von mehr als einem Teilnehmer enthalten (beispielsweise vollständige Rufnummer des Anrufers und Angerufenen), werden nur dann gespeichert, wenn vorab alle beteiligten Kommunikationspartner zugestimmt haben.

Gehören die Teilnehmer zu unterschiedlichen Netzbetreibern, müssen diese Informationen zur Zustimmung zwischen den Netzbetreibern vorab ausgetauscht werden.

Die Erklärung der Kommunikationspartner kann generell vorab oder zu Beginn einer Telekommunikationsverbindung erfolgen. Im zweiten Fall bezieht sich eine Zustimmung bevorzugt nur auf die eine folgende Telekommunikationsverbindung und hat somit keine Auswirkungen auf folgende Telekommunikationsverbindungen. Eine solche Zustimmung wird zum Beispiel durch eine generierte Netz-Ansage der Art: »Die Verbindungsdaten dieses Gespräches werden, wenn Sie es wünschen, aufgezeichnet. Bitte stimmen Sie der Aufzeichnung zu, in dem Sie jetzt die Taste "*" drücken« ermöglicht.

Nur wenn beide Teilnehmer durch Drücken der Taste "*", um im Beispiel zu bleiben, zustimmen, erfolgt eine Aufzeichnung der Daten.

Die Aufzeichnung der Verbindungsdaten und gegebenenfalls Inhalte erfolgt dann je nach Ausgestaltung sofort oder erst nach einer weiteren Information der Teilnehmer, zum Beispiel durch die Ansage des Ansagetextes:
»Die Verbindungsdaten dieses Gespräch werden, wie von Ihnen gewünscht, aufgezeichnet«.

Alternativ werden die Informationen zur Zustimmung von Teilnehmern zu diesem Verfahren zentral zum Beispiel von einer nationalen Regulierungsinstanz in einer Datenbank gespeichert. Beispielsweise während des Verbindungsaufbaus einer Telekommunikationsverbindung kann diese Datenbank abgefragt werden und die Berechtigung für eine Speicherung der Verbindungsdaten eingeholt werden.

Welche Vorgehensweise bzgl. der verbindungsbegleitenden Daten von Netzbetreibern oder entsprechenden Diensteanbietern praktiziert werden darf, ist insbesondere abhängig von der jeweils rechtlichen Situation hinsichtlich des Datenschutzes und des Fernmeldegeheimnisses, welches für die Anbieter des vorbenannten Services bzw. die Netzbetreiber Anwendung findet.

Es sind darüber hinaus verschiedene Ausgestaltungen zur Steuerung, welche Telekommunikationsverbindungen mitgeschnitten werden sollen, möglich, welche parallel oder einzeln realisiert werden können. Als Beispiel wird von einer Telekommunikationsverbindung zwischen einem Teilnehmer A und einem Teilnehmer B ausgegangen:
- Teilnehmer A und B müssen sich beide für den Service des Mitschnitts einer Telekommunikationsverbindung vorab mit Bezug auf die von ihnen genutzten Rufnummern oder sonstigen Kennungen angemeldet haben.

Dies bedeutet, dass alle Telekommunikationsverbindungen zwischen den beiden Teilnehmern, die einem derartigen Service zugestimmt haben, aufgezeichnet werden.

Gehören die Teilnehmer A und B zu unterschiedlichen Netzbetreibern, müssen diese Informationen zur Zustimmung zwischen den Netzbetreibern vorab ausgetauscht werden.

Alternativ werden die Informationen zur Zustimmung von Teilnehmern zu diesem Verfahren zentral zum Beispiel von einer nationalen Regulierungsinstanz in einer Datenbank gespeichert. Während eines Verbindungsaufbaus einer Telekommunikationsverbindung kann diese Datenbank abgefragt werden und die Berechtigung für einen Mitschnitt der Verbindung eingeholt werden.
- Beide Gesprächsteilnehmer A und B stimmen der Aufzeichnung vor Beginn ihres Gespräches zu.

Dies wird zum Beispiel durch eine generierte Netz-Ansage der Art:
»Dieses Gespräch wird, wenn Sie es wünschen, aufgezeichnet. Bitte stimmen Sie der Aufzeichnung zu, in dem Sie jetzt die Taste "*" drücken.« ermöglicht.
   Nur wenn beide Teilnehmer durch Drücken der Taste "*", um im Beispiel zu bleiben, zustimmen, erfolgt eine Aufzeichnung der Verbindung.

Die Aufzeichnung des Gespräches erfolgt dann je nach Ausgestaltung sofort oder erst nach einer weiteren Information der Teilnehmer, zum Beispiel durch die Ansage des Ansagetextes:
»Dieses Gespräch wird, wie von Ihnen gewünscht, ab jetzt aufgezeichnet«.

Diese Form der Zustimmung bezieht sich bevorzugt nur auf das eine folgende Gespräch und hat somit keine Auswirkungen auf folgende Gespräche.
- Es werden grundsätzlich sämtliche Telekommunikationsverbindungen vom Netzbetreiber aufgezeichnet.
- Es werden Gespräche vom Netzbetreiber nach Vorgaben Dritter, wie zum Beispiel staatlicher Behörden, die die Aufzeichnung sämtlicher
   Telekommunikationsverbindungen von zu bestimmenden Teilnehmern für einen gewissen Zeitraum anordnen, aufgezeichnet.

Welche Vorgehensweise bzgl. der Aufzeichnung von
Telekommunikationsverbindungen von Netzbetreibern oder entsprechenden Diensteanbietern praktiziert werden darf, ist insbesondere abhängig von der jeweils rechtlichen Situation hinsichtlich des Datenschutzes und des Fernmeldegeheimnisses, welches für die Anbieter des vorbenannten Services bzw. die Netzbetreiber Anwendung findet.

Die derzeitigen Anforderungen der europäischen Richtlinie zu "Data Retention"
(Vorratsdatenspeicherung) sowie der entsprechenden nationalen Gesetze, welche die europäische Richtlinie umsetzen, beziehen sich auf eine langfristige Speicherung der verbindungsbegleitenden Daten wie Zeitpunkt, Dauer, beteiligte Rufnummern bzw. Kennungen.

Sollte eine erweiterte Richtlinie eines Tages auch Anwendung auf den Inhalt von gespeicherten Telekommunikationsverbindungen finden, deckt der vorliegende Erfindungsgegenstand in der hier beschriebenen Ausführungsform diese erweiterten Anforderungen ab.

Die gilt ebenfalls für die Anwendung, dass grundsätzlich alle
Telekommunikationsverbindungen von den Netzbetreibern aufgezeichnet werden müssen, sollte dies eines Tages zu einer rechtlichen Vorgabe werden.

### Zugriff

Die Telekommunikationsteilnehmer oder Dritte können nach Abschluss der Telekommunikationsverbindung auf unterschiedliche Weise und mit unterschiedlicher Berechtigung auf die verbindungsbegleitenden Daten zugreifen.

Hierzu stehen je nach Ausgestaltung und Art der Telekommunikationsverbindung diverse Möglichkeiten zur Verfügung, welche parallel oder einzeln realisiert werden können:
- Zugriff der Telekommunikationsteilnehmer
   Nur derjenige, dessen personenbezogene Daten in einem Datensatz mit verbindungsbegleitenden Daten enthalten sind, hat Zugriff auf den Datensatz. Der Zugriff kann beispielsweise über Webinterface erfolgen.
   Enthält ein Datensatz personenbezogene Daten zu mehreren Personen, so müssen alle diese Personen dem Zugriff vorab zustimmen.

Somit kann der anrufende Teilnehmer nur dann auf den Datensatz mit den Rufnummern des Anrufers und des Angerufenen zugreifen, wenn auch der Angerufene dem Zugriff zugestimmt hat. Wenn die Rufnummer des Angerufenen im Datensatz anonymisiert oder verkürzt dargestellt ist, so kann die Zustimmung des Angerufenen entfallen.
- Zugriff durch Mitarbeiter des Netzbetreibers mit expliziter Freigabe durch den Telekommunikationsteilnehmer

Ein Zugriff durch Mitarbeiter des Netzbetreibers (etwa durch Mitarbeiter im Kundenservice, die Anfragen zu Rechnungen bearbeiten) kann nach ausdrücklicher Freigabe durch den Telekommunikationsteilnehmer auf die verbindungsbegleitenden Daten zu Telekommunikationsverbindungen dieses Telekommunikationsteilnehmers erfolgen. Der Telekommunikationsteilnehmer kann die Freigabe bedarfsgerecht auch einschränken (beispielsweise auf einen gewissen Zeitraum, auf Gespräche zu einer gewissen Zielrufnummer).
- Zugriff durch Mitarbeiter des Netzbetreibers ohne explizite Freigabe durch den Telekommunikationsteilnehmer

Ein Zugriff durch Mitarbeiter des Netzbetreibers (etwa durch Mitarbeiter, die Verdacht auf technischen Missbrauch zu Lasten Dritter bearbeiten) auf verbindungsbegleitende Daten zu Telekommunikationsverbindungen kann auch ohne ausdrücklicher Freigabe durch die betroffenen Telekommunikationsteilnehmer erfolgen. Bevorzugt ist hier ein Vier-Augen-Prinzip zu realisieren, so dass ein Zugriff eines einzelnen Mitarbeiters ohne Zustimmung oder Mitarbeit eines weiteren Mitarbeiters oder eines neutralen Dritten nicht erfolgen kann. Der neutrale Dritte kann beispielsweise Mitarbeiter einer hierfür autorisierten staatlichen Instanz sein.
- Zugriff durch Dritte ohne Freigabe durch den Netzbetreiber oder den Teilnehmer. Bei entsprechender Autorisierung etwa durch richterliche Anordnung können, Dritte, wie zum Beispiel staatliche Behörden, auf verbindungsbegleitende Daten von Telekommunikationsverbindungen einzelner Teilnehmer zugreifen.

Um die hier beschriebenen Möglichkeiten des Zugriffs zu realisieren, sind die verbindungsbegleitenden Daten entsprechend gesichert zu speichern. Bevorzugt sind die Daten ggf. zu duplizieren und jeweils so zu verschlüsseln, so dass eine Entschlüsselung ausschließlich in Kooperation der berechtigten und notwendigerweise zu beteiligenden Parteien möglich ist.

Die Telekommunikationsteilnehmer oder Dritte können nach Abschluss der Telekommunikationsverbindung auf unterschiedliche Weise und mit unterschiedlicher Berechtigung auf den "Mitschnitt" der Telekommunikationsverbindung zugreifen.

Hierzu stehen je nach Ausgestaltung und Art der Telekommunikationsverbindung diverse Möglichkeiten zur Verfügung, welche parallel oder einzeln realisiert werden können:
- Zugriff über Webinterface.
   Dies bedeutet, dass der Mitschnitt der Telekommunikationsverbindung per Download auf dem eigenen Computer gespeichert werden kann.

Alternativ kann der Mitschnitt speziell eines Telefongespräches auf dem eigenen Computer mittels Audiostreaming abgehört werden, ohne dass hierbei eine direkte Download-Möglichkeit besteht. Audiostreaming kann auch für textbasierte Telekommunikation wie SMS oder E-Mail genutzt werden, wenn diese automatisiert in Audiosignale umgewandelt wird.
- Zugriff mittels elektronischer Kommunikation, wie zum Beispiel per E-Mail.
   Dies bedeutet, dass ein Datenfile des aufgezeichneten Gesprächs in einem geeigneten Format per Anlage einer E-Mail an eine vorab im System zu hinterlegende E-Mail-Adresse des Gesprächsteilnehmers gesendet wird.
   Auch andere Formen einer elektronischer Kommunikation, wie zum Beispiel per MMS (Multimedia Messaging Service), sind möglich.
- Zugriff per Audionachricht auf das eigene Endgerät, wenn zum Beispiel über einen Anruf an Gesprächsteilnehmer A bzw. B das aufgezeichnete Gespräch abgespielt wird, so dass das Gespräch von Gesprächsteilnehmer A bzw. B nochmals angehört werden kann.

Hierzu stellt das Vermittlungssystem je nach Ausgestaltung beispielsweise per SMS den Gesprächsteilnehmern eine ggf. kostenfreie Rufnummer und Informationen zur Referierbarkeit des jeweiligen Gespräches zur Verfügung. Wenn der Gesprächsteilnehmer diese Rufnummer anwählt, erhält er die Möglichkeit, sich den Mitschnitt anzuhören.

Diese vorbenannte Zugriffsart ist bereits mit der auf denselben Anmelder zurückgehende Erfindung DE 101 61 660 A1 offenbart, wobei diese ein Verfahren zum zeitgleichen Verteilen von beliebigen Audioinformationen, wie Sprache, Töne und/oder Geräusche vorzugsweise zeitversetzt an mehrere Empfänger in einem Nachrichtennetz offenbart, wobei die Informationen als digitale/analoge Signale an vorbestimmte Empfänger direkt, oder nach Benachrichtigung über das Vorliegen einer Information für den entsprechenden Empfänger gesendet bzw. von diesem abrufbar sind.

Zur Vermeidung von Missbrauch sind angemessene Sicherheitsmechanismen zu implementieren, um den Zugriff auf den Inhalt der aufgezeichneten Telekommunikationsverbindungen durch unberechtigte Personen gemäß den geltenden Richtlinien abzusichern.

So kann der Zugriff auf das entsprechende Datenfile bevorzugt nur durch einen gemeinschaftlichen und gleichberechtigten Zugriff durch den Anrufer und den Angerufenen erfolgen.

Hierzu werden die Files systemseitig verschlüsselt, wobei eine Entschlüsselung der Files ausschließlich durch eine gemeinschaftliche Entschlüsselung beider Gesprächsteilnehmer möglich ist.

Dies bedeutet, dass beide Parteien nur einen Teil des zur Entschlüsselung notwendigen kryptographischen Schlüssels haben.

Alternativ ist das Datenfile zweifach verschlüsselt, wobei der erste, notwendige Schlüssel zur Entschlüsselung der Anrufer hat, den anderen der Angerufene, wodurch auch hier die Entschlüsselung nur gemeinschaftlich erfolgen kann.

Grundsätzlich empfiehlt sich hierbei die Anwendung asymmetrischer kryptographischer Verfahren, wie zum Beispiel das "PGP"-Verfahren (Pretty Good Privacy-Verfahren).

Eine sichere Ausgestaltung eines Zugriffs über ein Webinterface (Web-Schnittstelle) wird im nachfolgenden kurz beschrieben.

Zwei Gesprächsteilnehmer A und B haben jeweils einen Zugang zum System, auf dem die verschlüsselten Telekommunikationsverbindungsfiles gespeichert sind, der jeweils über ein Passwort oder andere aus dem Stand der Technik bekannte Absicherungsmethoden abgesichert ist.

Eine korrekte Eingabe des Passwortes erlaubt den Zugriff auf die Gesprächsdatenfiles, welche jedoch noch mit den kryptographischen Schlüsseln beider am Gespräch beteiligten Gesprächsteilnehmer verschlüsselt sind.

Gesprächsteilnehmer A kann durch eine von ihm vorgenommene Auswahl der Gesprächsdatenfiles diese zur Entschlüsselung mit seinem Entschlüsselungs-Schlüssel freigeben.

Jedoch ist ein Zugriff auf die entsprechenden Datenfiles der mitgeschnittenen Gespräche für den Gesprächspartner A erst dann möglich, wenn der Gesprächspartner B diese auch freigegeben hat, und umgekehrt.

Dies bedeutet, dass lediglich durch eine gemeinsame Freigabe von beiden beteiligten Gesprächspartnern A und B die dann freigegebenen Files zum Download oder Audiostreaming den beteiligten Gesprächspartnern A und B zur Verfügung stehen.

Damit auch Dritte, die hierzu berechtigt sind, einen Zugriff auf einen gespeicherten File eines Telefongespräches bzw. einer Telekommunikationsverbindung z.B. zwischen den Teilnehmern A und B erreichen, können systemseitig weitere Kopien des originalen bzw. digitalisierten und umkodierten Datenfiles angelegt werden, welche mit einem dem jeweiligen Dritten zugeordneten kryptographischen Schlüssel verschlüsselt werden.

Zugriff erhält ein Dritter entsprechend über einen ihm zugeordneten Zugang.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in der Beschreibung offenbarten Ausbildungen des Erfindungsgegenstandes, werden als erfindungswesentlich beansprucht, soweit sie einzeln oder in Kombination gegenüber dem Stand der Technik neu sind.

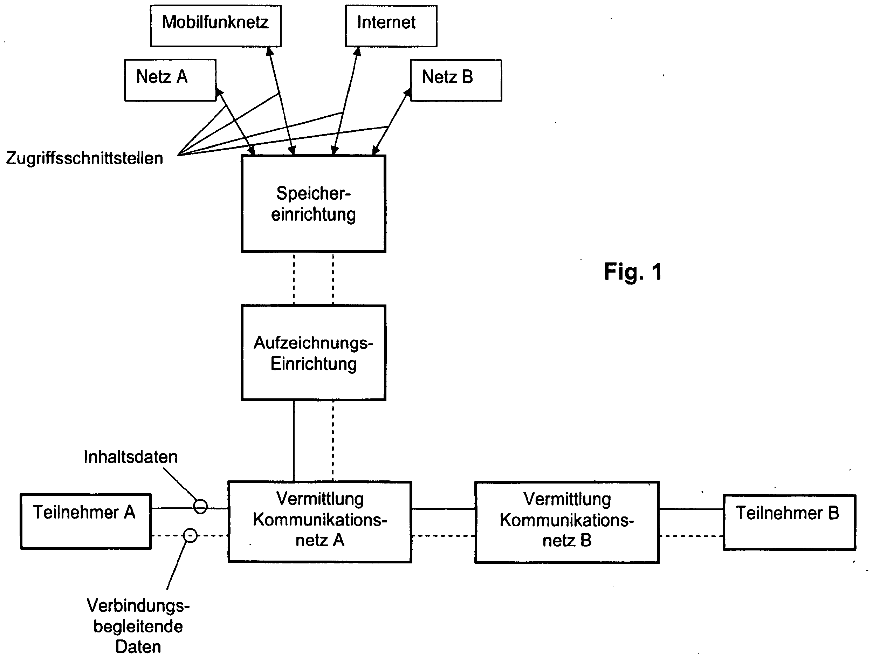

Figur 1 zeigt schematisch eine mögliche Realisierung des Verfahrens in einem Kommunikationsnetz. Am Verfahrensablauf können auch nur ein einziges oder mehr als zwei Kommunikationsnetze und Teilnehmer beteiligt sein. Eine Aufzeichnungsvorrichtung und Speichereinrichtung für die Datenfiles kann wahlweise in nur einem oder allen beteiligten Kommunikationsnetzen vorhanden sein. Über entsprechende Zugriffsschnittstellen kann ein Zugriff auf die in der Speichereinrichtung gespeicherten Datenfiles erfolgen. Der Zugriff kann über eines der beteiligten Kommunikationsnetze, das Internet, ein Mobilfunknetz oder andere öffentliche oder speziell eingerichtete Datenverbindungen erfolgen.

## Patentansprüche

1. Verfahren zum Accessmanagement von verbindungsbegleitenden Daten von Telekommunikationsverbindungen sowohl in Festnetzen, Mobilfunknetzen und im Internet, wobei im Rahmen einer Telekommunikationsverbindung die zugehörigen verbindungsbegleitenden Daten erzeugt und in einem System gespeichert werden, wobei :
sowohl Speicherung der Daten als auch Zugriff auf die Daten nach frei wählbaren Vorgaben der jeweiligen Telekommunikationsteilnehmer und / oder der jeweils beteiligten Netzbetreiber erfolgen;
die für eine Telekommunikationsverbindung zu speichernden Daten in einem Datenfile in den verwendeten Telekommunikationsnetzen gegen generellen Zugriff kryptographisch gesichert gespeichert werden, wobei das Datenfile die Rufnummern der Kommunikationspartner und die Uhrzeit enthalten, wobei Rufnummern je nach Situation vollständig, verkürzt oder anonymisiert oder nicht gespeichert werden;
das Aufzeichnen bzw. Abspeichern von Datenfiles einer Telekommunikationsverbindung im Mobilfunknetz, Festnetz oder im Internet durch zumindest einen der beteiligten Netzbetreiber durchgeführt wird;
einerseits steuerbar ist, welche verbindungsbegleitenden Daten zu welchen Verbindungen gespeichert werden sollen, und andererseits frei wählbar festgelegbar ist, wer auf welche Weise Zugriff auf die gespeicherten verbindungsbegleitenden Daten hat;
die Speicherung eines Datensatzes verbindungsbegleitender Daten über Anmeldeinformationen realisiert wird, die zwischen den beteiligten Netzbetreibern ausgetauscht werden; und
ein Zugriff auf die Datenfiles die Freigabe der gesichert gespeicherten Datenfiles durch alle Teilnehmer der Telekommunikationsverbindung oder durch diejenigen Teilnehmer der Telekommunikationsverbindung, von denen personenbezogene Daten wie beispielsweise die eigene Rufnummer in den Datenfiles enthalten sind, voraussetzt.

2. Verfahren nach Anspruch 1, **dadurch gekennzeichnet, dass** der Netzbetreiber die Datenfiles grundsätzlich aller Telekommunikationsverbindungen aufzeichnet und abspeichert.

3. Verfahren nach einem der vorhergehenden Ansprüche 1 bis 2, **dadurch gekennzeichnet, dass** die gespeicherten Datenfiles einer Telekommunikationsverbindung vor einem unberechtigten Zugriff geschützt werden.

4. Verfahren nach einem der vorhergehenden Ansprüche 1 bis 3, **dadurch gekennzeichnet, dass** vor der Speicherung des Telekommunikationsdatenfiles eine Umkodierung der Daten erfolgt.

5. Verfahren nach einem der vorhergehenden Ansprüche 1 bis 4, **dadurch gekennzeichnet, dass** die Speicherung von Datenfiles einer Telekommunikationsverbindung erst nach vorheriger Anmeldung und Zustimmung aller Teilnehmer einer Telekommunikationsverbindung durchgeführt wird, wobei die Anmeldeinformationen der Teilnehmer der Telekommunikationsverbindung zwischen zwei unterschiedlichen Netzbetreibern, wie zum Beispiel Festnetz und Mobilfunknetz unterschiedlicher Netzanbieter, vor der Speicherung ausgetauscht werden.

6. Verfahren nach einem der vorhergehenden Ansprüche 1 bis 5, **dadurch gekennzeichnet, dass** die Speicherung von Datenfiles einer Telekommunikationsverbindung erst nach Anmeldung und Zustimmung der Teilnehmer einer Telekommunikationsverbindung durchgeführt wird, wobei die Informationen zur Zustimmung der Teilnehmer der Telekommunikationsverbindung zentral in einer Datenbank gespeichert werden und diese Informationen beispielsweise während des Verbindungsaufbaus der jeweiligen Telekommunikationsverbindung abgefragt und ausgewertet werden.

7. Verfahren nach einem der vorhergehenden Ansprüche 1 bis 6, **dadurch gekennzeichnet, dass** die Speicherung von Datenfiles einer Telekommunikationsverbindung erst nach Zustimmung der Teilnehmer einer Telekommunikationsverbindung durchgeführt wird, wobei die Zustimmung von beiden Gesprächspartnern zu Beginn der jeweiligen Telekommunikationsverbindung mittels generierter Fragen und expliziter Zustimmung der Teilnehmer der Telekommunikationsverbindung ausgeführt wird.

8. Verfahren nach einem der vorhergehenden Ansprüche 1 bis 7, **dadurch gekennzeichnet, dass** die Daten vom Netzbetreiber nach Vorgaben Dritter, wie zum Beispiel staatlicher Behörden, aufgezeichnet werden, welche die Aufzeichnung sämtlicher Telekommunikationsverbindungen von zu bestimmenden Teilnehmern für einen gewissen Zeitraum anordnen.

9. Verfahren nach einem der vorhergehenden Ansprüche 1 bis 8, **dadurch gekennzeichnet, dass** ein Zugriff von berechtigten Personen auf die gespeicherten Datenfiles der Telekommunikationsverbindungen mittels Webinterface zum Download und / oder mittels elektronischer Kommunikation ausführbar ist.

10. Verfahren nach Anspruch 9, **dadurch gekennzeichnet, dass** die Zustimmung eines Teilnehmers entfallen kann, wenn die Rufnummer eines Teilnehmers im Datenfile anonymisiert oder verkürzt dargestellt ist.

11. Verfahren nach einem der vorhergehenden Ansprüche 1 bis 10, **dadurch gekennzeichnet, dass** ein Zugriff auf die Datenfiles durch Dritte, wie zum Beispiel berechtigter staatlicher Behörden, die Freigabe der gesichert gespeicherten Datenfiles durch alle Teilnehmer der Telekommunikationsverbindung nicht voraussetzt.

12. Verfahren nach einem der vorhergehenden Ansprüche 1 bis 11, **dadurch gekennzeichnet, dass** ein Zugriff auf die Datenfiles durch den Netzbetreiber mit expliziter Freigabe durch den Telekommunikationsteilnehmer durchführbar ist.

13. Verfahren nach Anspruch 12, **dadurch gekennzeichnet, dass** der Telekommunikationsteilnehmer dem Netzbetreiber eine beschränkte Freigabe für den Zugriff auf die Datenfiles erteilen kann, beispielsweise auf einen gewissen Zeitraum beschränkt, auf Gespräche zu einer gewissen Zielrufnummer beschränkt.

14. Verfahren nach einem der vorhergehenden Ansprüche 1 bis 13, **dadurch gekennzeichnet, dass** ein Zugriff auf die Datenfiles durch den Netzbetreiber ohne explizite Freigabe durch den Telekommunikationsteilnehmer erfolgt, wobei hier bevorzugt ein Vier-Augen-Prinzip realisieren wird, so dass ein Zugriff eines einzelnen Mitarbeiters des Netzbetreibers ohne Zustimmung oder Mitarbeit eines weiteren Mitarbeiters oder eines neutralen Dritten nicht erfolgen kann, wobei der neutrale Dritte beispielsweise Mitarbeiter einer hierfür autorisierten staatlichen Instanz sein kann.

15. Verfahren nach einem der vorhergehenden Ansprüche 1 bis 13, **dadurch gekennzeichnet, dass** ein Zugriff auf die Datenfiles durch Dritte ohne Freigabe durch den Netzbetreiber oder den Teilnehmer erfolgt.

16. Verfahren nach Anspruch 15, **dadurch gekennzeichnet, dass** Dritte, beispielsweise staatliche Behörden, bei entsprechender Autorisierung etwa durch richterliche Anordnung auf die Datenfiles oder verbindungsbegleitende Daten von Telekommunikationsverbindungen einzelner Teilnehmer zugreifen können.

17. Verfahren nach einem der vorhergehenden Ansprüche 1 bis 16, **dadurch gekennzeichnet, dass** neben den verbindungsbegleitenden Daten auch die Inhalte der zugeordneten Telekommunikationsverbindungen aufgezeichnet werden.

18. Vorrichtung zur Ausführung des Verfahrens nach den Ansprüchen 1 bis 17.

## Claims

1. Method for the access management of link-accompanying data of telecommunications links both in fixed-line and mobile telephone networks and on the internet, wherein within the framework of a telecommunications link the associated link-accompanying data are generated and stored in a system, wherein
both storage of the data and access to the data are effected according to freely selectable standards of the respective telecommunications subscribers and/or the network operators respectively involved;
the data to be stored for a telecommunications link are stored in a data file in the telecommunications networks used with cryptographic protection against general access, wherein the data file contains the telephone numbers of the communications partners and the time, wherein telephone numbers are, depending on the situation, stored completely or in abbreviated or anonymised form or not stored;
the recording or storage of data files of a telecommunications link in the mobile telephone or fixed-line network or on the internet is carried out by at least one of the network operators involved;
on the one hand it can be controlled which link-accompanying data are to be stored for which links, and on the other hand it can be freely selected and fixed who has access to the stored link-accompanying data and in what manner;
the storage of a data record of link-accompanying data is carried out by means of log-on information which is exchanged between the network operators involved; and access to the data files requires clearance of the protected-storage data files by all subscribers of the
telecommunications link or by those subscribers of the telecommunications link whose personal data, such as for example their own telephone number, are contained in the data files.

2. Method according to claim 1, **characterised in that** the network operator records and stores the data files of basically all telecommunications links.

3. Method according to one of the preceding claims 1 to 2, **characterised in that** the stored data files of a telecommunications link are protected against unauthorised access.

4. Method according to one of the preceding claims 1 to 3, **characterised in that**, before storage of the telecommunications data file, recoding of the data is effected.

5. Method according to one of the preceding claims 1 to 4, **characterised in that** the storage of data files of a telecommunications link is carried out only after prior logging on and consent of all subscribers of a telecommunications link, wherein the log-on information of the subscribers of the telecommunications link between two different network operators such as for example fixed-line and mobile telephone networks of different network providers is exchanged before storage.

6. Method according to one of the preceding claims 1 to 5, **characterised in that** the storage of data files of a telecommunications link is carried out only after logging on and consent of the subscribers of a telecommunications link, wherein the information on consent of the subscribers of the telecommunications link is stored centrally in a database and this information is retrieved and evaluated for example during set-up of the respective telecommunications link.

7. Method according to one of the preceding claims 1 to 6, **characterised in that** the storage of data files of a telecommunications link is carried out only after consent of the subscribers of a telecommunications link, wherein the consent of both dialogue partners is obtained at the beginning of the respective telecommunications link by means of generated questions and explicit consent of the subscribers of the telecommunications link.

8. Method according to one of the preceding claims 1 to 7, **characterised in that** the data are recorded by the network operator according to standards of third parties such as for example government authorities, who order the recording of all telecommunications links of subscribers to be determined for a certain length of time.

9. Method according to one of the preceding claims 1 to 8, **characterised in that** access by authorised persons to the stored data files of the telecommunications link can be gained by web interface for downloading and/or by electronic communication.

10. Method according to claim 9, **characterised in that** the consent of a subscriber can be omitted if the telephone number of a subscriber is shown in anonymised or abbreviated form in the data file.

11. Method according to one of the preceding claims 1 to 10, **characterised in that** access to the data files by third parties such as for example authorised government authorities does not require clearance of the protected-storage data files by all subscribers of the telecommunications link.

12. Method according to one of the preceding claims 1 to 11, **characterised in that** access to the data files by the network operator can be gained with explicit clearance by the telecommunications subscriber.

13. Method according to claim 12, **characterised in that** the telecommunications subscriber can grant the network operator restricted clearance for access to the data files, for example restricted to a certain length of time, for conversations to a certain destination telephone number.

14. Method according to one of the preceding claims 1 to 13, **characterised in that** access to the data files by the network operator is effected without explicit clearance by the telecommunications subscriber, wherein preferably a four-eyes principle is implemented here, so that access by an individual employee of the network operator cannot be effected without consent or cooperation of a further employee or a neutral third party, wherein the neutral third party can be for example an employee of a government authority authorised for this purpose.

15. Method according to one of the preceding claims 1 to 13, **characterised in that** access to the data files by third parties is effected without clearance by the network operator or the subscriber.

16. Method according to claim 15, **characterised in that** third parties, for example government authorities, can access the data files or link-accompanying data of telecommunications links of individual subscribers in case of appropriate authorisation for example by judicial order.

17. Method according to one of the preceding claims 1 to 16, **characterised in that**, in addition to the link-accompanying data, the contents of the associated telecommunications links are also recorded.

18. Apparatus for carrying out the method according to claims 1 to 17.

## Revendications

1. Procédé pour la gestion d'accès de données d'accompagnement de liaisons de télécommunication aussi bien dans des réseaux fixes que dans des réseaux mobiles et Internet, étant précisé que dans le cadre d'une liaison de télécommunication, les données d'accompagnement de liaison correspondantes sont produites et sont stockées dans un système, et :
que le stockage des données ainsi que l'accès aux données se font suivant des critères aptes à être librement prédéfinis par les abonnés aux télécommunications respectifs et/ou par les exploitants de réseau impliqués ;
les données à stocker pour une liaison de télécommunication sont stockées dans un fichier de données dans les réseaux de télécommunication utilisés, avec une protection cryptographique contre un accès général, le fichier de données contenant les numéros d'appel des correspondants et l'heure, et les numéros d'appel étant stockés en entier, de manière abrégée ou anonyme ou pas, suivant la situation ;
que l'enregistrement ou le stockage des fichiers de données d'une liaison de télécommunication dans le réseau mobile, dans le réseau fixe ou Internet sont réalisés par l'un au moins des exploitants de réseau ;
qu'il est possible d'une part de commander quelles données d'accompagnement de liaison doivent être stockées pour quelles liaisons, et d'autre part de fixer librement qui a accès de quelle manière aux données d'accompagnement de liaison stockées ;
que le stockage d'un jeu de données d'accompagnement de liaison est réalisé grâce à des informations de demande de liaison qui sont échangées entre les exploitants de réseau impliqués ; et
qu'un accès aux fichiers de données suppose l'autorisation des fichiers de données stockés de manière protégée, par tous les participants à la liaison de télécommunication ou par ceux dont des données personnelles comme par exemple leur propre numéro d'appel sont contenues dans les fichiers de données.

2. Procédé selon la revendication 1, **caractérisé en ce que** l'exploitant de réseau enregistre et stocke fondamentalement les fichiers de données de toutes les liaisons de télécommunication.

3. Procédé selon l'une des revendications 1 à 2 précédentes, **caractérisé en ce que** les fichiers de données d'une liaison de télécommunication qui sont stockés sont protégés contre un accès non autorisé.

4. Procédé selon l'une des revendications 1 à 3 précédentes, **caractérisé en ce qu'**un codage des données a lieu avant le stockage du fichier de données de télécommunication.

5. Procédé selon l'une des revendications 1 à 4 précédentes, **caractérisé en ce que** le stockage de fichiers de données d'une liaison de télécommunication n'est réalisé qu'après demande de liaison et accord préalables de tous les participants à une liaison de télécommunication, étant précisé que les informations de demande de liaison desdits participants sont échangées avant le stockage entre deux exploitants de réseau différents, comme par exemple le réseau fixe et le réseau mobile de fournisseurs de réseau différents.

6. Procédé selon l'une des revendications 1 à 5 précédentes, **caractérisé en ce que** le stockage de fichiers de données d'une liaison de télécommunication n'est réalisé qu'après demande de liaison et accord des participants à une liaison de télécommunication, étant précisé que les informations pour l'accord desdits participants sont stockées de manière centralisée dans une banque de données et que ces informations sont consultées et analysées par exemple pendant l'établissement de chaque liaison de télécommunication.

7. Procédé selon l'une des revendications 1 à 6 précédentes, **caractérisé en ce que** le stockage de fichiers de données d'une liaison de télécommunication n'est réalisé qu'après accord des participants à une liaison de télécommunication, étant précisé que l'accord des deux correspondants est donné au début de chaque liaison de télécommunication à l'aide de questions générées et d'un accord explicite des participants à la liaison.

8. Procédé selon l'une des revendications 1 à 7 précédentes, **caractérisé en ce que** les données sont enregistrées par l'exploitant du réseau d'après des critères prédéfinis par des tiers comme par exemple des autorités publiques, qui ordonnent l'enregistrement pour un certain temps de toutes les liaisons de télécommunication d'abonnés à définir.

9. Procédé selon l'une des revendications 1 à 8 précédentes, **caractérisé en ce qu'**un accès de personnes autorisées aux fichiers de données stockés des liaisons de télécommunication peut se faire à l'aide d'une interface web pour un téléchargement et/ou à l'aide d'une communication électronique.

10. Procédé selon la revendication 9, **caractérisé en ce que** l'accord d'un participant peut être supprimé si le numéro d'appel d'un abonné est présenté de manière anonyme ou abrégée dans le fichier de données.

11. Procédé selon l'une des revendications 1 à 10 précédentes, **caractérisé en ce qu'**un accès aux fichiers de données par des tiers comme par exemple des autorités publiques autorisées suppose l'autorisation des fichiers de données stockés de manière protégée, par tous les participants à la liaison de télécommunication.

12. Procédé selon l'une des revendications 1 à 11 précédentes, **caractérisé en ce qu'**un accès aux fichiers de données par l'exploitant de réseau est possible avec une autorisation explicite par l'abonné de télécommunication.

13. Procédé selon la revendication 12, **caractérisé en ce que** l'abonné de télécommunication peut donner à l'exploitant de réseau une autorisation limitée d'accès aux fichiers de données, par exemple limitée à un certain temps, à des communications avec un certain numéro d'appel.

14. Procédé selon l'une des revendications 1 à 13 précédentes, **caractérisé en ce qu'**un accès aux fichiers de données par l'exploitant de réseau se fait sans autorisation explicite par l'abonné de télécommunication, étant précisé qu'un principe de double regard est appliqué de préférence ici, de sorte qu'un accès par un collaborateur individuel de l'exploitant de réseau n'est pas possible sans l'accord ou la collaboration d'un autre collaborateur ou d'un tiers neutre, et que le tiers neutre peut être par exemple collaborateur d'une instance publique autorisée.

15. Procédé selon l'une des revendications 1 à 13 précédentes, **caractérisé en ce qu'**un accès aux fichiers de données par des tiers se fait sans l'autorisation par l'exploitant de réseau ou par l'abonné.

16. Procédé selon l'une des revendications 1 à 15 précédentes, **caractérisé en ce que** des tiers, par exemple des autorisés publiques, peuvent avoir accès aux fichiers de données ou à des données d'accompagnement de liaisons de télécommunication d'abonnés individuels avec une permission correspondante donnée par exemple par une disposition judiciaire.

17. Procédé selon l'une des revendications 1 à 16 précédentes, **caractérisé en ce qu'**en plus des données d'accompagnement de liaison, les contenus des liaisons de télécommunication associées sont également enregistrés.

18. Dispositif pour la mise en oeuvre du procédé selon les revendications 1 à 17.
